# EUROPEAN PATENT SPECIFICATION

(11) **EP 2 690 422 B1**
(45) Date of publication and mention of the grant of the patent: **08.04.2020**
(21) Application number: 13152548.7
(22) Date of filing: 24.01.2013
(51) Int. Cl.: G01R 31/34, G01B 7/14, G01M 15/14

(54) **Method for monitoring machines with rotating shafts**
Verfahren zur Überwachung von Maschinen mit drehende Wellen
Procédé de surveillance de machines avec arbres rotatifs

(30) Priority: 25.07.2012 EP 12177906
(43) Date of publication of application: 29.01.2014
(73) Proprietor: Ansaldo Energia IP UK Limited, London W1G 9DQ (GB)
(72) Inventor: Hobelsberger, Maximilian, 5303 Wuerenlingen (CH); Haffner, Yves Ken, 5400 Baden (CH); Laprais, Etienne Louis, 5415 Nussbaumen (CH); Broch, Peter, 5452 Oberrohrdorf (CH)
(74) Representative: Bernotti, Andrea

(56) References cited:
- EP-A1- 1 766 327
- CA-A1- 2 682 067
- US-A- 4 502 046
- US-A- 4 502 046
- US-A- 4 563 675
- US-A- 4 573 123
- US-B1- 6 460 013

## Description

### Background of the invention

The invention relates to a method for monitoring machines with shafts that rotate when in operation. The invention also relates to a device for monitoring machines with shafts that rotate when in operation.

This monitoring relates in particular to generators, turbines, and motors when in operation and consists primarily of locating rubbing points of the rotor or the shaft with the housing that occur when there is friction between the shafts. A primary application is the monitoring for this purpose of gas turbines in large power station turbine generator sets.

### Description of the prior art

It is known from the prior art to measure the electrical insulation between a rotor or shaft and the machine housing. When rubbing points occur, this insulation is usually lost because metal-to-metal contact happens at the rubbing point. The insulation can be monitored easily using a test voltage. Monitoring devices of this type are commercially available and widely used.

EP 1 643 259 discloses a method and a device for detecting rubbing or contact points on machines with rotating shafts. This method and this device consist of determining the rubbing or contact points of a shaft when in operation by measuring all the currents that are grounded via a provided end connection of the shaft. Machine shafts are normally grounded in a specific fashion for safety reasons so that the currents that flow away via this grounding device are measured.

A shortcoming of this method is the poor ability to locate the rubbing points. The locating is restricted to establishing whether the rubbing point is situated along the rotor on the driving side of the generator or along the rotor on the non-driving side.

Another method is the EDMS method, as is known from the publication "Smiths Aerospace, GE (1)", that allows rubbing points in the turbine to be detected. When turbine blades rub against the housing, electrostatically charged clouds of particles occur that can be detected. It is thus possible to locate rubbing points to a certain degree when the row of blades is clearly distinguished by the number of blades and when the rubbing mechanism allows a rubbing pulse frequency to be determined.

It can thus generally be determined that the methods known from the prior art have two important disadvantages:
a) It is a disadvantage here that, in terms of the location of the rubbing point, it is only possible to determine whether it is situated on the driving side or on the non-driving side.
b) It is also disadvantageous that it is not possible to differentiate at friction points between rows of blades with the same number of blades. Moreover, such a system only allows turbines to be monitored and, in contrast, bearings cannot be monitored.
US4502046 discloses a system for monitoring metal-to-metal contact in rotating machinery according to the preamble of claim 1.
US6460013 discloses a rotating machinery monitor providing a warning that is indicative of a developing problem with the rotating machinery.
US4573123 relates to electrostatic monitoring of gas turbine engines, in particular to recognition of signals of magnitude in excess of a threshold which is variable with engine acceleration.

### Summary of the invention

The invention will remedy these disadvantages. The object of the invention, as characterized in the claims, is to detect these points of contact between the rotor and the housing during operation, to locate the rubbing points and measure how long they are rubbing. This makes it possible to identify the relevant components and take appropriate measures according to the risk. These measures are, for example, adapting the mode of operation of the machine, in the worst case interrupting operation, or planning in advance for the next stoppage for maintenance. This is based on the recognition that many components are designed such that a certain amount of wear is intentional (grinding of seals), and other components are dimensioned such that rubbing points can be tolerated for a certain short period. There are, however, components that do not tolerate rubbing points.

According to the invention, the method is characterized in that electrical reflectometric measurement is carried out in order to determine the location of the rubbing point. The invention is based on the recognition that the shaft, turbine and generator is an electrical coaxial system: the electrically conductive rotor is surrounded by an electrically conductive housing at a relatively short distance. In such systems, electrical voltage pulses are propagated between the inner conductor, i.e. the rotor, and the outer conductor, i.e. the housing, along the respective surfaces at a characteristic speed of propagation, and reflected pulses occur at points of electrical discontinuity. It has also been noted that an electrically conductive connection between the rotor and the housing occurs at a rubbing point and acts as a point of electrical discontinuity, or that a residual dielectric gap is so narrow that it also acts as a point of discontinuity.

The technical implementation of the invention is characterized in that short electrical voltage pulses are applied at an appropriate point between the rotor and the housing and also that the periods until any reflected pulses arrive are measured by means of passage time measurements. The locations of the rubbing points can be concluded from the periods and a known speed of propagation according to the known laws of reflectometry. The rise and fall time of the pulses is approximately 100 ps, the magnitude of the pulses for example 5V, the duration of the pulses 10ns and the pulse recovery period 10 µs (pulse rate 100,000/s).

The reflectometric measurement can thus also be carried out as a function of frequency instead of as a function of time. To do this, rather than short pulses, continuous alternating voltage signals, for example sinusoidal ones, can for example be fed into the coaxial system. Voltage and current measurements can be used to determine the transmission characteristics, for example in the form of S parameters, at input ports, for example the impedance, at different frequencies, for example in the range from 1 MHz to 5 GHz. Depending on the location of the rubbing point, rubbing points cause changes in the transmission characteristics and can thus be located.

In summary, it is a feature of the invention to detect rubbing and/or contact points on machines with rotating parts, wherein the latter form an electrical coaxial system with respect to the stationary parts of such a machine, in which system electrical voltage pulses are propagated at a characteristic speed because of the small distance between the rotating and the stationary part. Short electrical voltage pulses and/or continuous alternating voltage signals are preferably applied at an appropriate point between the rotating part and the stationary part. An electrical connection occurs between the rotating and the stationary part at a rubbing and/or contact point. In order to locate this rubbing and/or contact point as a point of electrical discontinuity, passage time measurements are performed along the path of propagation of the electrical voltage pulses and/or of the continuous alternating voltage signals in order to measure the period of time until the reflected pulses arrive.

All the rotating parts of the machine, for example the blades of a gas turbine set, are here preferably carried by a single continuous rotor, the stationary part then being formed by a stator. Any interruptions in the passage of the rotor are thus prevented, which has a positive effect on the accuracy of the measurements.

The rubbing and/or contact points that need to be identified and which can readily cause damage can thus preferably be located using reflectometric measuring methods, which results in continuous monitoring which is easy to implement in existing systems without making any mechanical changes.

The reflective measurement takes place using short electromagnetic pulses fed into the machine, specifically into the cavity between the rotor and the stator, i.e. also preferably into the cavity between the stator blades and rotor blades, when the underlying machine is a gas turbine set.

According to a preferred embodiment, a slowly changing voltage is applied to the rotor with respect to the stator in order to generate the voltage pulses, the amplitude of said voltage being selected to be of such a magnitude that electrical breakdowns between the rotor and stator occur at the rubbing points, and that the electrical breakdowns which occur at the rubbing points are located by passage time measurements and/or on the basis of the pulse patterns forced by the machine geometry.

Preferably, the voltage pulses and/or the continuous alternating voltage signals are fed via a bearing on the driving side or non-driving side of a generator belonging to the machine, by virtue of which it is also achieved that there is no need to make any significant changes.

In the invention, if the turbine belonging to the machine requires to be focussed in a particular fashion with regard to points of discontinuity, this can be achieved by the voltage pulses and/or the continuous alternating voltage signals being fed in at both ends of the turbine. This makes sense when the caloric loads in the turbine are high and accordingly there is also a greater risk that rubbing and/or contact points may occur during operation in association with the operating blades.

The system-inherent capabilities of the method for detecting rubbing and/or contact points that are being formed can thus easily be increased by feeding in the voltage pulses and/or the continuous alternating voltage signals and/or measuring the reflected pulses and/or locating the rubbing and/or contact points via EDMS sensors and/or blade tip distance sensors belonging to the turbine.

According to the invention, the applied, slowly changing voltage is additionally overlaid with rapid voltage pulses, as a result of which the results from such measurements are more meaningful.

Because the safety of the operation of the underlying machine is at stake here, it is advantageous to simultaneously process reference data from a machine with no points of discontinuity for calculating by measurement the rubbing and/or contact points, and/or to simultaneously use reference data from a machine with points of discontinuity that have been located.

In this connection, static methods based on the rotational phases can also be applied to calculate the points of discontinuity, which increases the meaningfulness of the results obtained with them, in terms of obtaining a reliable determination of rubbing and/or contact points that are actually present.

If a pulse coding is to be used to maximize the identification of pulse echoes that are valid for measurement purposes when the pulses are emitted, it is appropriate to provide that a pulse sequence is followed with known, short, identical or different pulse intervals and/or that the pulse amplitudes are gradated appropriately, it also being possible to use radar location methods to detect the pulse echoes, these methods being advantageously applicable within the sense of the invention.

In order to implement the method according to the invention, the machine is designed as a gas turbine set that essentially consists of at least one compressor, at least one combustion chamber, at least one turbine, at least one generator, and at least one rotor, and the rotor is operatively connected to a stator. Such a gas turbine set can advantageously also be operated with a sequential combustion where the detection according to the invention brings particularly great advantages when the problem of rubbing and/or contact points is at least twice as great, bearing in mind that a highpressure and a low-pressure turbine are operatively active.

### Brief description of the drawings

Exemplary embodiments of the and examples not according to the invention are explained below with the aid of the drawings. Any elements that are not essential for the direct understanding of the invention have been omitted. Identical elements are provided with the same reference numerals in the different drawings, in which:
Figure 1 shows a cross section of a gas turbine set having a measurement system;
Figure 2 shows a detailed cross section of a turbine, with the route of the pulse;
Figure 3 shows a cross section of a gas turbine set with pulses fed in via the insulated bearing;
Figure 4 shows a cross section of an insulated plain bearing;
Figure 5 shows a cross section of a gas turbine set having two pulse and measurement coupling points;
Figure 6 shows a cross section of a gas turbine set having three pulse and measurement coupling points and a sensor and measurement system; and
Figure 7 shows a cross section of a gas turbine set having two pulse and measurement coupling points and a signal generator.

### Description of the preferred embodiments

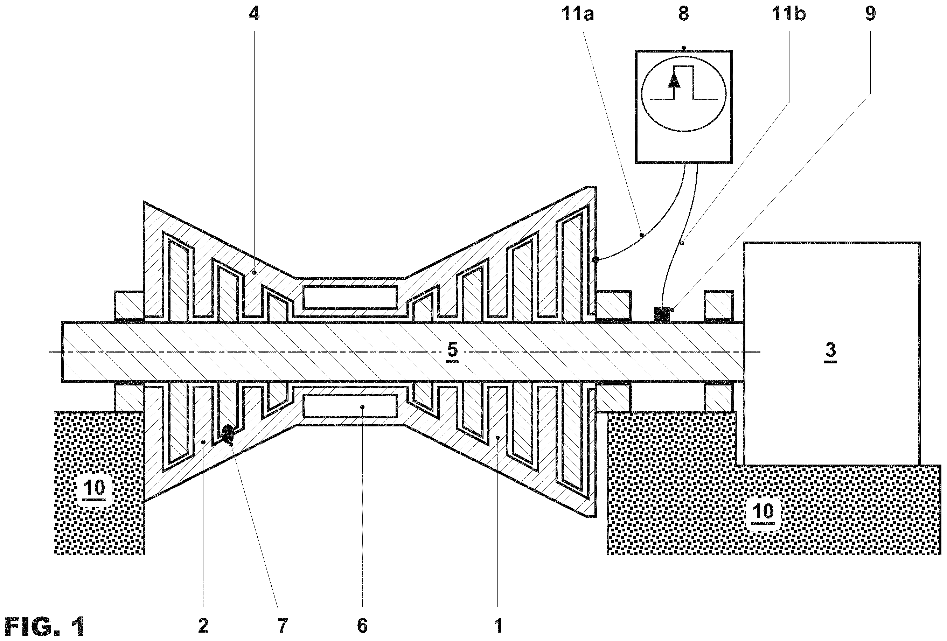

In an example not according to the invention, a gas turbine set that essentially consists of at least one compressor 1, one combustion chamber 6 that is only suggested in the drawing, one turbine 2, and one generator 3 is shown schematically in cross section in figure 1. Such a gas turbine set can also be operated by sequential combustion where a first turbine is arranged at the outlet side of a first combustion chamber connected downstream from the compressor, and a second combustion chamber is operated at the outlet side of this first turbine, the hot gases of which are applied to a second turbine. The rubbing point in the turbine is labeled as point 7 in the drawing. The measuring instrument 8 injects the said electrical voltage pulses into the coaxial system via measurement cables 11a, 11b, the contact on the housing 4, and the shaft contact 9 and uses them to measure the passage times or the transmission characteristics. The grounding contact that is always present is advantageously used as the shaft contact 9. The whole gas turbine set stands on a stable base 10.

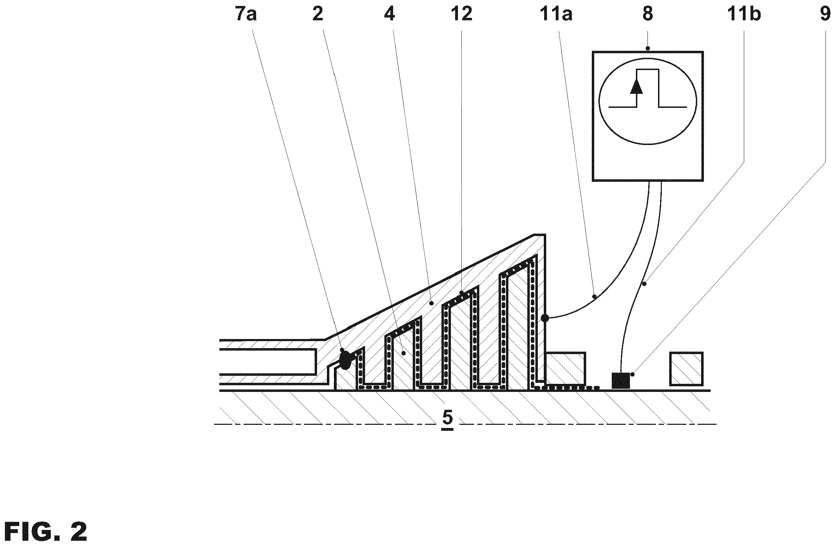

In a further example not according to the invention, a turbine 2 is shown schematically in figure 2 as part of the gas turbine set with, shown in a dotted line, the possible route 12 of an electrical pulse that progresses through the non-metal gaps between the rotor 5 and the housing 4 and is reflected at the rubbing point 7a. In reality, there are multiple paths with multiple types of reflection determined partly by the rubbing point 7a itself and partly also by the components present, for example blades, that also act as points of discontinuity.

Appropriate algorithms for processing the measurement data make it possible to differentiate between normal, machine-specific reflections and actual rubbing points. For example, the pulse patterns are recorded during an operating state with no rubbing of the rotor and stored as reference patterns or reference data. It is then easier to detect reflections caused by rubbing points by comparison with this reference data.

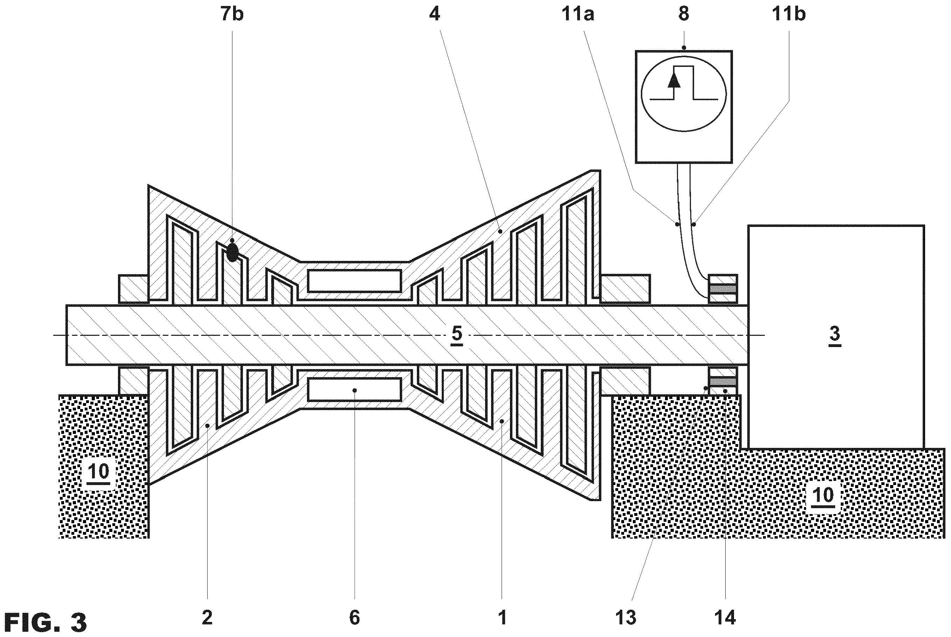

In a further example not according to the invention, figure 3 shows a particularly advantageous feed-in point: the insulated generator bearing 13 is used to feed in pulses. At least the bearing on the non-driving side is insulated in all generators, and often the bearing on the driving side too. This means that the bearing shells 14 are arranged so that they are electrically insulated from the housing or from the ground. The bearing shells are, however, well coupled to the shaft in terms of high frequency via the thin films of lubricant. In order to feed in the measurement pulses 11a, 11b, voltage pulses are here applied between the bearing housing and the bearing shell. If a further insulated metal intermediate layer is arranged in the bearing, the measurement pulse can be applied between the housing and this additional layer. The pulses are then fed capacitively to the shaft.

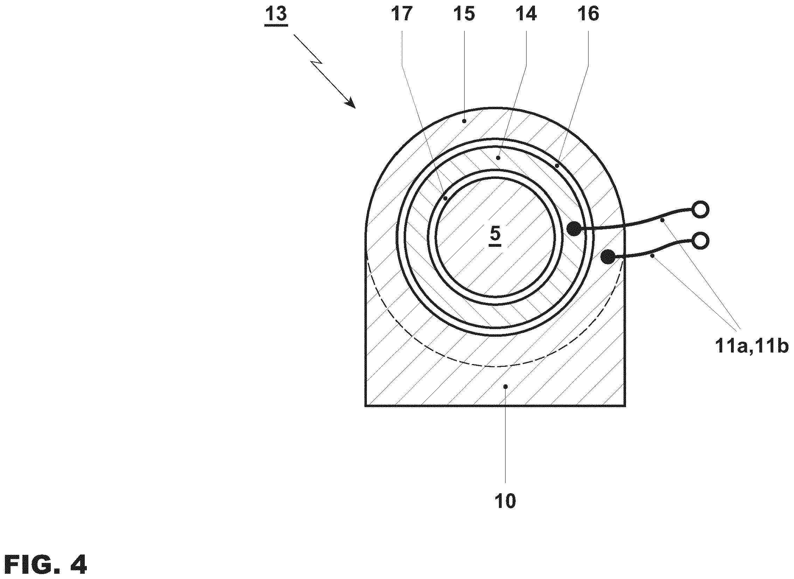

Figure 4 shows an insulated generator bearing 13 that consists of an outer ring 15, an inner ring 14 consisting of bearing shells, an insulating layer 16 that acts between the outer ring 15 and the inner ring 14, a plain bearing supported on a film of oil 17 being provided between the inner ring 14 and the rotor shaft 5. The measurement pulses called on to detect rubbing points originate, on the one hand, from the inner ring 14 (11a) and, on the other hand, from the outer ring (11b), as can be seen specifically in figure 4.

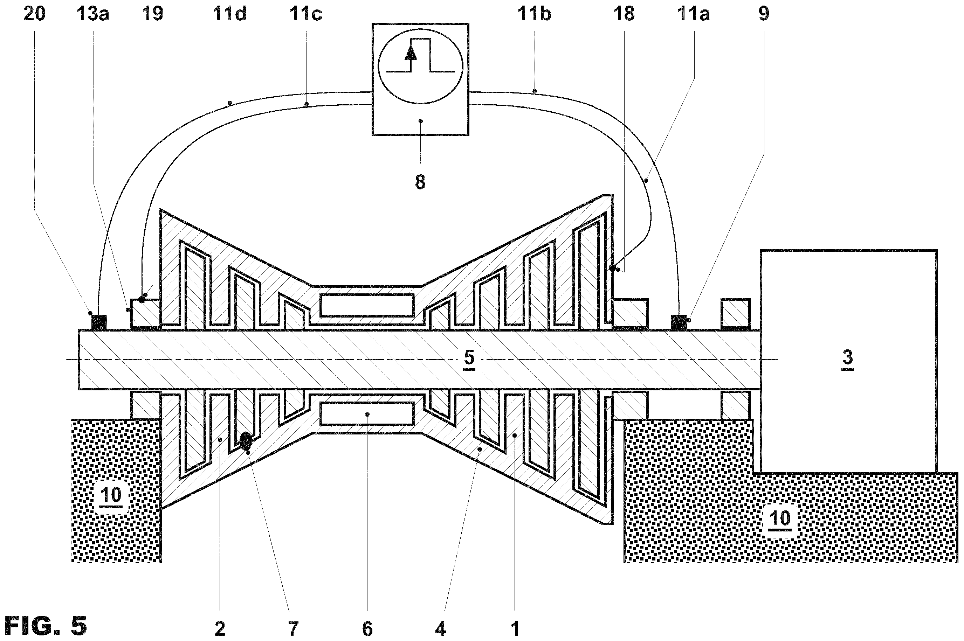

Figure 5 shows a gas turbine set in which two pulse feed-in points, situated at separate locations, are shown. Firstly, a feed-in point 9 for the measurement pulses is situated on the compressor side on the rotor 5, and a second point 18 is situated on the housing of the compressor 4. Secondly, a feed-in point 18 for the measurement pulses is situated on the turbine side on the turbine bearing 13a, and a second point 20 is in turn situated on the rotor 5. In this arrangement, the pulses or measurement voltages are injected at one or both ends 19, 20 of the turbine and the system responses are measured at both locations. In the gas turbine and method according to the invention, the pulses or measurement voltages are injected at both ends 19, 20 if the turbine. In this arrangement, for example dual-port transmission characteristics, for example the dual-port S-parameter matrix, can be identified. Improved location results can be obtained because of the different feed-in locations that cause different times for the pulse to pass to the rubbing point. In the most simple case, the two passage times must add up to a total passage time for the respective path through the turbine.

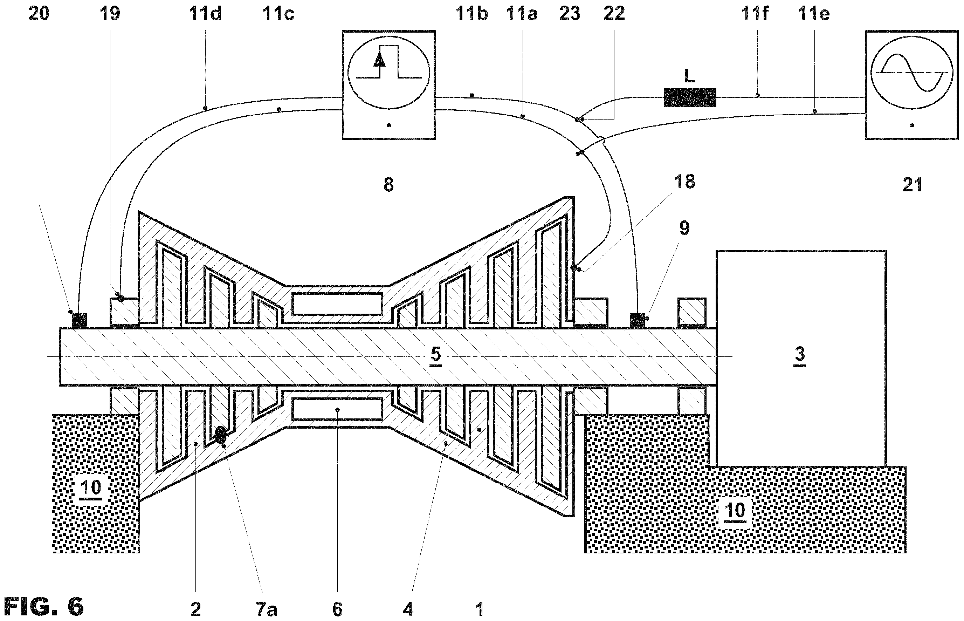

Figure 6 shows in turn a gas turbine set having two pulse feed-in points which is largely based on the same structure as in Figure 5. In this case according to Figure 5, a capacitive air gap sensor L is used as the first emitter and receiver, and a shaft contact 9, typically the grounding contact of the shaft, is used as the second emitter. An EDMS system is additionally installed that is also used to detect rubbing points. The capacitive sensor of this EDMS system is inserted as a third sensor for the reflectometric rubbing point locating system. More reliable detection of rubbing phenomena can be obtained by correlating the measurement data with time when non-rubbing phenomena can be excluded.

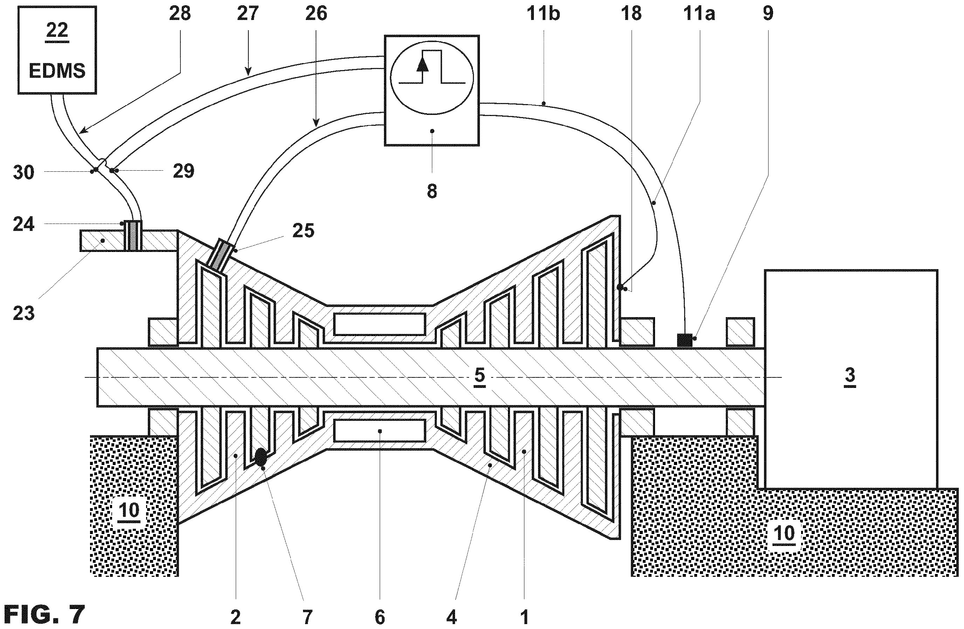

A gas turbine set can again be seen in Figure 7. The measurement signals are fed in via two measurement points. A signal generator is additionally arranged at one measurement point such that the generated voltage is applied between the shaft and ground. The signal generator is coupled electrically via an electrical network that only allows low-frequency signals to pass from the shaft connection to the signal generator terminal. In Figure 7, this is simply a series inductance. The voltage generated by the signal generator is a relatively low-frequency alternating voltage, typically a sinusoidal voltage in the range +/- 10V with a frequency of 1 Hz, for example. The rapid measurement pulses are overlaid on this slow alternating voltage. In the case of sufficiently small air gap widths in the region of, for example, the blades, the slow voltage causes an electrical flashover process when the breakdown field strength is reached. This flashover itself already generates high-frequency pulses that are received by the measurement device at both ends of the turbine and the differences in their passage times can be measured. The differences in passage time enable conclusions to be drawn about the location of the breakdown. The magnitude of the voltage applied at the breakdown enables conclusions to be drawn about the extent of the breakdown, i.e. the width of the smallest air gap in the system. The injected rapid pulses enable an additional location-finding because the plasma acts as a point of discontinuity in the region of the breakdown and the pulses are thus reflected. The short measurement pulses do not themselves cause an (avalanche) breakdown as they are too short for an avalanche to form. They can, however, certainly initiate a breakdown themselves that is then detected by the next pulse if this pulse follows at a short time gap.

## Claims

1. A method for detecting rubbing and/or contact points on a machine, the machine being a gas turbine with a rotating part and a stationary part that essentially consists of at least one compressor, at least one combustion chamber, at least one turbine, at least one generator, and at least one rotor, and the rotor is operatively connected to a stator, wherein the rotating part forms an electrical coaxial system together with the stationary part of the machine, in which system electrical voltage signals are propagated between the rotating and the stationary part at passage times, short electrical voltage pulses and/or continuous alternating voltage signals being applied at at least one location of the machine between the rotating part and the stationary part, a point of electrical discontinuity in the path of propagation being between the rotating and the stationary part at a rubbing and/or contact point, and passage time measurements being performed in order to locate this rubbing and/or contact point; **characterised in that** the rubbing and/or the contact points in the machine are located using reflectometric measurement methods; wherein a slowly changing voltage is applied to the rotor with respect to the stator in order to generate the voltage pulses, the amplitude of said voltage being selected to be of such a magnitude that electrical breakdowns between the rotor and stator occur at the rubbing points, and that the electrical breakdowns which occur at the rubbing points are located by passage time measurements and/or on the basis of the pulse patterns forced by the machine geometry; wherein the applied, slowly changing voltage is additionally overlaid with rapid voltage pulses; whrein the voltage pulses and/or the continuous alternating voltage signals are fed in at both ends of the machine.

2. The method as claimed in claim 1, **characterized in that** all the rotating parts of the machine are carried by a single continuous rotor, and **in that** the stationary part is formed by a stator.

3. The method as claimed in one of claims 1-2, **characterized in that** short electromagnetic pulses are injected into the machine, specifically into the cavity between the rotor and the stator, for the reflective measurement.

4. The method as claimed in one of claims 1-3, **characterized in that** the voltage pulses and/or the continuous alternating voltage signals are fed in via the grounding contacts of the rotor.

5. The method as claimed in one of claims 1-4, **characterized in that** the voltage pulses and/or the continuous alternating voltage signals are fed in via a bearing on the driving side or non-driving side of a generator belonging to the machine.

6. The method as claimed in one of claims 1-5, **characterized in that** the voltage pulses and/or the continuous alternating voltage signals are fed in and/or the reflected pulses are measured and/or the rubbing and/or contact points are located via at least one blade tip distance sensor belonging to the turbine.

7. The method as claimed in one of claims 1-6, **characterized in that** reference data from a machine with no points of discontinuity is simultaneously processed for calculating by measurement the rubbing and/or contact points, and/or reference data from a machine with points of discontinuity that have been located are simultaneously used.

8. The method as claimed in claim 1, **characterized in that** static methods based on the rotational phases are applied to calculate the points of discontinuity.

9. The method as claimed in one of claims 1-7, **characterized in that** a pulse coding is carried out to maximize the identification of pulse echoes that are valid for measurement purposes when the pulses are emitted, which pulse coding contains a pulse sequence with known, short, identical or different pulse intervals and/or an appropriate gradation of the pulse amplitudes.

10. The method as claimed in claim 8, **characterized in that** radar location methods are used to detect the pulse echoes.

11. The method as claimed in claim 1, **characterized in that** the gas turbine set has a sequential combustion, wherein the first turbine is arranged at the outlet side of a first combustion chamber connected downstream from the compressor, and the second turbine is arranged at the outlet side of a second combustion chamber.

## Patentansprüche

1. Verfahren zum Erfassen von Reibungs- und/oder Kontaktpunkten an einer Maschine, wobei die Maschine eine Gasturbine mit einem rotierenden Teil und einem stationären Teil ist, die im Wesentlichen aus wenigstens einem Verdichter, wenigstens einer Brennkammer, wenigstens einer Turbine, wenigstens einem Generator und wenigstens einem Rotor besteht, und der Rotor mit einem Stator in Wirkverbindung steht, wobei der rotierende Teil zusammen mit dem stationären Teil der Maschine ein elektrisches koaxiales System bildet, in welchem elektrische Spannungssignale zwischen dem rotierenden und dem stationären Teil mit Durchlaufzeiten übertragen werden, wobei kurze elektrische Spannungsimpulse und/oder kontinuierliche Wechselspannungssignale an wenigstens einer Stelle der Maschine zwischen dem rotierenden Teil und dem stationären Teil angelegt werden, wobei ein Punkt elektrischer Diskontinuität im Übertragungsweg zwischen dem rotierenden und dem stationären Teil an einem Reibungs- und/oder Kontaktpunkt liegt, und wobei Durchlaufzeitmessungen durchgeführt werden, um diesen Reibungs- und/oder Kontaktpunkt zu lokalisieren; **dadurch gekennzeichnet, dass** die Reibungs- und/oder Kontaktpunkte in der Maschine unter Verwendung reflektometrischer Messverfahren lokalisiert werden; wobei eine sich langsam ändernde Spannung an den Rotor in Bezug auf den Stator angelegt wird, um die Spannungsimpulse zu erzeugen, wobei die Amplitude der Spannung in einer solchen Größe gewählt wird, dass elektrische Durchschläge zwischen dem Rotor und dem Stator an den Reibungspunkten auftreten, und dass die elektrischen Durchschläge, die an den Reibungspunkten auftreten, mittels Durchlaufzeitmessungen und/oder anhand der von der Maschinengeometrie erzwungenen Impulsmuster lokalisiert werden; wobei die angelegte, sich langsam ändernde Spannung zusätzlich mit schnellen Spannungsimpulsen überlagert wird; und wobei die Spannungsimpulse und/oder die kontinuierlichen Wechselspannungssignale an beiden Enden der Maschine eingespeist werden.

2. Verfahren nach Anspruch 1, **dadurch gekennzeichnet, dass** alle rotierenden Teile der Maschine von einem einzigen kontinuierlichen Rotor getragen werden, und dass der stationäre Teil von einem Stator gebildet wird.

3. Verfahren nach einem der Ansprüche 1 oder 2, **dadurch gekennzeichnet, dass** zur Reflexionsmessung kurze elektromagnetische Impulse in die Maschine, insbesondere in den Hohlraum zwischen Rotor und Stator, eingespeist werden.

4. Verfahren nach einem der Ansprüche 1 bis 3, **dadurch gekennzeichnet, dass** die Spannungsimpulse und/oder die kontinuierlichen Wechselspannungssignale über die Erdungskontakte des Rotors eingespeist werden.

5. Verfahren nach einem der Ansprüche 1 bis 4, **dadurch gekennzeichnet, dass** die Spannungsimpulse und/oder die kontinuierlichen Wechselspannungssignale über ein Lager auf der Antriebsseite oder der Nichtantriebsseite eines zu der Maschine gehörenden Generators eingespeist werden.

6. Verfahren nach einem der Ansprüche 1 bis 5, **dadurch gekennzeichnet, dass** über wenigstens einen zur Turbine gehörenden Schaufelspitzenabstandssensor die Spannungsimpulse und/oder die kontinuierlichen Wechselspannungssignale eingespeist und/oder die reflektierten Impulse gemessen und/oder die Reibungs- und/oder Kontaktpunkte lokalisiert werden.

7. Verfahren nach einem der Ansprüche 1 bis 6, **dadurch gekennzeichnet, dass** gleichzeitig Referenzdaten von einer Maschine ohne Diskontinuitätspunkte verarbeitet werden, um durch Messung die Reibungs- und/oder Kontaktpunkte zu berechnen, und/oder gleichzeitig Referenzdaten von einer Maschine mit lokalisierten Diskontinuitätspunkten verwendet werden.

8. Das Verfahren nach Anspruch 1, **dadurch gekennzeichnet, dass** statische Methoden, die auf den Rotationsphasen basieren, angewendet werden, um die Diskontinuitätspunkte zu berechnen.

9. Verfahren nach einem der Ansprüche 1 bis 7, **dadurch gekennzeichnet, dass** eine Impulskodierung durchgeführt wird, um bei der Aussendung der Impulse die Identifizierung von Impulsechos zu maximieren, die für Messzwecke gültig sind, wobei die Impulscodierung eine Impulsfolge mit bekannten, kurzen, identischen oder unterschiedlichen Impulsintervallen und/oder einer geeigneten Abstufung der Impulsamplituden enthält.

10. Das Verfahren nach Anspruch 8, **dadurch gekennzeichnet, dass** Radar-Lokalisierungsverfahren verwendet werden, um die Impulsechos zu erfassen.

11. Verfahren nach Anspruch 1, **dadurch gekennzeichnet, dass** der Gasturbinensatz eine sequentielle Verbrennung aufweist, wobei die erste Turbine an der Auslassseite einer ersten, dem Verdichter nachgeschalteten Brennkammer angeordnet ist und die zweite Turbine an der Auslassseite einer zweiten Brennkammer angeordnet ist.

## Revendications

1. Procédé destiné à détecter des points de frottement et / ou de contact sur une machine, la machine étant une turbine à gaz présentant une partie tournante et une partie fixe, qui se compose sensiblement d'un compresseur au moins, d'une chambre de combustion au moins, d'une turbine au moins, d'un générateur au moins, et d'un rotor au moins, et le rotor est connecté de manière opérationnelle à un stator, où la partie tournante forme un système coaxial électrique avec la partie fixe de la machine, où des signaux de tension électrique du système sont propagés entre la partie tournante et la partie fixe à des instants de passage, des impulsions de tension électrique courtes, et / ou des signaux de tension alternative continus étant appliqués au moins à un emplacement de la machine entre la partie tournante et la partie fixe, un point de discontinuité électrique dans le chemin de propagation se situant entre la partie tournante et la partie fixe au niveau d'un point de frottement et / ou de contact, et des mesures de l'instant de passage étant exécutées afin de localiser ce point de frottement et / ou de contact ;
**caractérisé en ce que**
les points de frottement et / ou de contact dans la machine, sont localisés en utilisant des procédés de mesures réflectométriques ;
où une tension qui varie lentement est appliquée au rotor par rapport au stator afin de générer des impulsions de tension, la grandeur de l'amplitude de ladite tension étant sélectionnée de telle sorte que des claquages électriques entre le rotor et le stator se produisent au niveau des points de frottement, et que les claquages électriques qui se produisent au niveau des points de frottement, soient localisés par des mesures de temps de passage et / ou sur la base de motifs d'impulsions forcés par la géométrie de la machine ;
où des impulsions de tension rapides sont superposées en outre à la tension appliquée qui varie lentement ;
où les impulsions de tension et / ou les signaux de tension alternative continus sont introduits au niveau des deux extrémités de la machine.

2. Procédé selon la revendication 1,
**caractérisé en ce que** toutes les parties tournantes de la machine sont portées par un seul rotor continu, et
**en ce que** la partie fixe est constituée par un stator.

3. Procédé selon la revendication 1 ou 2,
**caractérisé en ce que** des impulsions électromagnétiques courtes sont injectées dans la machine, en particulier dans la cavité entre le rotor et le stator, pour effectuer une mesure de réflexion.

4. Procédé selon l'une quelconque des revendication 1 à 3,
**caractérisé en ce que** les impulsions de tension et / ou les signaux de tension alternative continus, sont introduits par l'intermédiaire des contacts de mise à la terre du rotor.

5. Procédé selon l'une quelconque des revendication 1 à 4,
**caractérisé en ce que** les impulsions de tension et / ou les signaux de tension alternative continus, sont introduits par l'intermédiaire d'un roulement du côté entraînement ou du côté non entraînement d'un générateur appartenant à la machine.

6. Procédé selon l'une quelconque des revendication 1 à 5,
**caractérisé en ce que** les impulsions de tension et / ou les signaux de tension alternative continus, sont introduits, et / ou les impulsions réfléchies sont mesurées, et / ou les points de frottement et / ou de contact sont localisés, par l'intermédiaire d'au moins un capteur de distance de bout de pale appartenant à la turbine.

7. Procédé selon l'une quelconque des revendication 1 à 6,
**caractérisé en ce que** des données de référence provenant d'une machine sans points de discontinuité sont traitées simultanément pour calculer par mesure les points de frottement et / ou de contact, et / ou des données de référence provenant d'une machine avec des points de discontinuité qui ont été localisés, sont utilisées simultanément.

8. Procédé selon la revendication 1,
**caractérisé en ce que** des procédés statiques basés sur les phases de rotation, sont appliqués pour calculer les points de discontinuité.

9. Procédé selon l'une quelconque des revendication 1 à 7,
**caractérisé en ce qu'**un codage d'impulsion est exécuté afin de maximiser l'identification des échos des impulsions qui sont valides pour des besoins de mesure, lorsque les impulsions sont émises, lequel codage d'impulsion contient une séquence d'impulsions avec des intervalles d'impulsions connus, courts, identiques ou différents, et / ou une gradation appropriée des amplitudes des impulsions.

10. Procédé selon la revendication 8,
**caractérisé en ce que** des procédé de localisation par radar sont utilisés pour détecter les échos des impulsions.

11. Procédé selon la revendication 1,
**caractérisé en ce que** l'ensemble turbine à gaz présente une combustion séquentielle, où la première turbine est agencée du côté sortie d'une première chambre de combustion connectée en aval du compresseur, et la seconde turbine est agencée du côté sortie d'une seconde chambre de combustion.
